# EUROPEAN PATENT APPLICATION

(11) **EP 2 209 290 A1**
(43) Date of publication of application: **21.07.2010**
(21) Application number: 09175949.8
(22) Date of filing: 13.11.2009
(51) Int. Cl.: H04M 1/725, H04M 1/60

(54) **Voice communication method, device, and system**

(30) Priority: 14.01.2009 CN 200910001931
(71) Applicant: Huawei Technologies Co., Ltd., Longgang District, Shenzhen Guangdong 518129 (CN)
(72) Inventor: Hu, Congjie, Shenzhen Guangdong 518129 (CN)
(74) Representative: Charles, Glyndwr

(57) **Abstract**

A voice communication method is provided. The method is applicable in a microwave communication device. For a sender, the method includes the following steps. A voice signal of a sender's headset is received (S101). The voice signal is converted into voice information (S102). Voice information and management information are processed to generate a modulated mixed signal (S103). The modulated mixed signal is sent to a receiver's microwave communication device (S104). For a receiver, the method includes the following steps. The modulated mixed signal sent by the sender's microwave communication device is received. The modulated mixed signal is processed to separate demodulated voice information. The voice information is converted into a voice signal. The voice signal is sent to the receiver's headset. A voice communication device and system are also provided, which are applicable for voice communication during microwave deployment and maintenance. Therefore, operation complexity is decreased and operation safety for a worker is increased.

## Description

### FIELD OF THE TECHNOLOGY

The present invention relates to the field of communication technology, and more particularly to a voice communication method, a voice communication device, and a voice communication system.

### BACKGROUND OF THE INVENTION

Microwave communication is a communication means of realizing information transmission through microwave frequencies. For digital microwave communication, a digital signal processing technology is used in microwave transmission, which not only has various characteristics such as fast construction, small investment, and flexible applications for the microwave communication, but also various advantages such as reliable transmission quality, strong anti-interference ability, and long transmission lines. As a forerunner in modem wireless communication, the microwave communication plays a very important role in the communication field.

During microwave deployment and maintenance, a worker in an equipment room and a worker on a tower usually need frequent communication. Currently a common communication method is performing communication with mobile phones and interphones.

During the implementation of the present invention, the inventor finds that the prior art at least has the following problems.

During work, if a worker performs equipment operations and communication with mobile phones or interphones at the same time, operation complexity is increased and accidents possibly occur during the operations, so that safety for the worker during work is reduced.

### SUMMARY OF THE INVENTION

The present invention is directed to a voice communication method, a voice communication device, and a voice communication system, thus increasing safety when a worker is at work.

In order to achieve the objectives, the following technical solutions are adopted in the embodiments of the present invention.

In an embodiment, the present invention provides a voice communication method applicable in microwave communication device, which includes the following steps.

A voice signal of a sender's headset is received.

The voice signal is converted into voice information.

The voice information and management information are processed to generate a modulated mixed signal.

The modulated mixed signal is sent to a receiver's microwave communication device.

In an embodiment, the present invention provides a voice communication method applicable in a microwave communication device, which includes the following steps.

A modulated mixed signal sent by a sender's microwave communication device is received.

The modulated mixed signal is processed to separate demodulated voice information.

The voice information is converted into a voice signal.

The voice signal is sent to a receiver's headset.

In an embodiment, the present invention provides a microwave communication device, which includes a receiving unit, a voice converting unit, a processing unit, and a sending unit.

The receiving unit is adapted to receive a voice signal of a sender's headset.

The voice converting unit is adapted to convert the voice signal into voice information.

The processing unit is adapted to process the voice information and management information to generate a modulated mixed signal.

The sending unit is adapted to send the modulated mixed signal to a receiver's microwave communication device.

In an embodiment, the present invention provides a microwave communication device, which includes a receiving unit, a processing unit, a voice converting unit, and a sending unit.

The receiving unit is adapted to receive a modulated mixed signal sent by a sender's microwave communication device.

The processing unit is adapted to process the modulated mixed signal to separate demodulated voice information.

The voice converting unit is adapted to convert the voice information into a voice signal.

The sending unit is adapted to send the voice signal to a receiver's headset.

In an embodiment, the present invention provides a voice communication system, which includes a sender's headset, a receiver's headset, a sender's microwave communication device connected to the sender's headset, and a receiver's microwave communication device connected to the receiver's headset. The sender's microwave communication device is connected to the receiver's microwave communication device.

The sender's microwave communication device is adapted to receive a voice signal of the sender's headset, convert the voice signal into voice information, process the voice information and management information to generate a modulated mixed signal, and send the modulated mixed signal to the receiver's microwave communication device.

The receiver's microwave communication device is adapted to receive the modulated mixed signal sent by the sender's microwave communication device, process the modulated mixed signal to separate demodulated voice information, convert the demodulated voice information into the voice signal, and send the voice signal to the receiver's headset.

With the voice communication method, the voice communication device, and the voice communication system provided in the embodiments of the present invention, a sender's microwave communication device converts a received voice signal of a sender's headset into voice information, processes the voice information and management information, and sends a generated modulated mixed signal after processing to a receiver's microwave communication device. The receiver's microwave communication device separates demodulated voice information from the received modulated mixed signal, converts the demodulated voice information into a voice signal, and sends the voice signal to a receiver's headset. Compared with the prior art, in the embodiments of the present invention, a headset serves as communication equipment, so that operation complexity is decreased and possibility of accidents during operation of a worker is reduced. Headsets with low prices are used as communication equipment, so that the communication cost and the maintenance cost are decreased.

### BRIEF DESCRIPTION OF THE DRAWINGS

To illustrate the technical solutions according to the embodiments of the present invention more clearly, the accompanying drawings for describing the embodiments are introduced briefly as follows. Apparently, the accompanying drawings in the following description are only some embodiments of the present invention, and persons of ordinary skill in the art can derive other drawings from the accompanying drawings without creative efforts.
FIG. 1 is a flow chart of a voice communication method according to a first embodiment of the present invention;
FIG. 2 is a flow chart of a voice communication method according to a second embodiment of the present invention;
FIG. 3 is a flow chart of a voice communication method according to a third embodiment of the present invention;
FIG. 4 is a flow chart of a voice communication method according to a fourth embodiment of the present invention;
FIG. 5 is a schematic structural view of a voice communication device according to a fifth embodiment of the present invention;
FIGs. 6-1 and 6-2 are schematic structural views of a voice communication device according to a sixth embodiment of the present invention;
FIG. 7 is a schematic structural view of a voice communication device according to a seventh embodiment of the present invention;
FIGs. 8-1 and 8-2 are schematic structural views of a voice communication device according to an eighth embodiment of the present invention; and
FIG. 9 is a schematic structural view of a voice communication system according to a ninth embodiment of the present invention.

### DETAILED DESCRIPTION OF THE EMBODIMENTS

The technical solution of the present invention will be clearly and completely described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

In embodiments of the present invention, a voice communication method, a voice communication device, and a voice communication system are provided.

In order to make the advantages of the technical solution of present invention more comprehensible, the present invention is described in further detail below with reference to the accompanying drawings and embodiments.

In all the embodiments of the present invention, when an indoor worker is a sender and an outdoor worker is a receiver, a sender's microwave communication device is an indoor unit (IDU) and a receiver's microwave communication device is an outdoor unit (ODU). When the outdoor worker is a sender and the indoor worker is a receiver, the sender's microwave communication device is an ODU and the receiver's microwave communication device is an IDU.

In all the embodiments of the present invention, signals are transmitted between two entities and an object being operated in the same entity is information. For example, signals are transmitted between a sender's headset and a sender's microwave communication device, between the sender's microwave communication device and a receiver's microwave communication device, and between the receiver's microwave communication device and a receiver's headset. Information is operated inside the sender's microwave communication device and the receiver's microwave communication device.

In the embodiments, the present invention provides a voice communication method applicable in a microwave communication device, which is capable of increasing safety when a worker is at work.

### First Embodiment

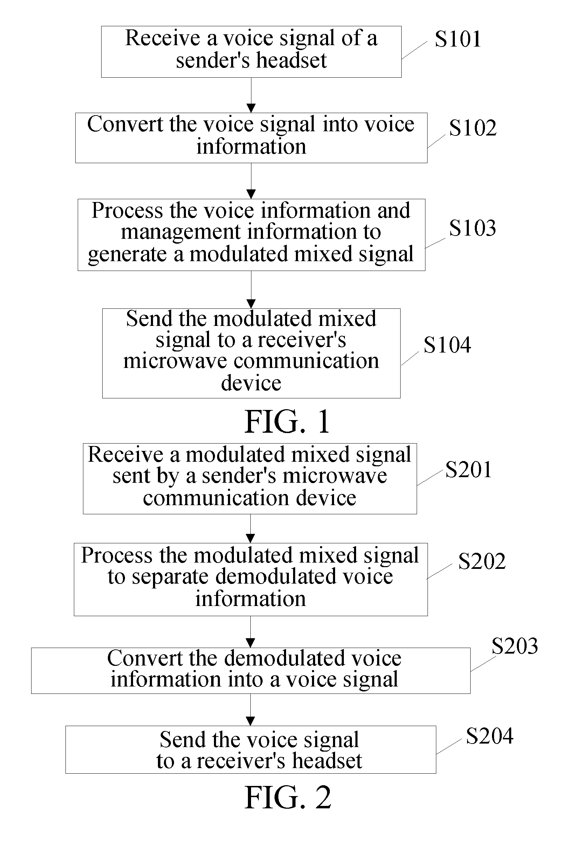

As shown in FIG. 1, for a sender, a voice communication method includes the following steps.

In step S101, a voice signal of a sender's headset is received.

In step S102, the voice signal is converted into voice information

In step S103, the voice information and management information are processed to generate a modulated mixed signal.

In step S104, the modulated mixed signal is sent to a receiver's microwave communication device.

The receiver's microwave communication device separates demodulated voice information from the modulated mixed signal, converts the demodulated voice information into a voice signal, and sends the voice signal to a receiver's headset.

In the voice communication method provided in this embodiment according to the present invention, for the sender, the received voice signal of the sender's headset is converted into the voice information, the voice information and management information are processed, and the generated modulated mixed signal after processing is sent to the receiver's microwave communication device. Compared with the prior art, headsets used in the embodiment of the present invention serve as communication equipment, so that operation complexity is decreased and possibility of accidents during operation of a worker is reduced. The headsets at low prices are used as the communication equipment, so that the communication cost and the maintenance cost are decreased. With the headsets as the communication equipment, a connection situation between two microwave communication devices is able to be detected, so that maintainability of the IDU and ODU is increased.

### Second Embodiment

As shown in FIG. 2, for a receiver, a voice communication method includes the following steps.

In step S201, a modulated mixed signal sent by a sender's microwave communication device is received.

In step S202, the modulated mixed signal is processed to separate demodulated voice information.

In step S203, the demodulated voice information is converted into a voice signal.

In step S204, the voice signal is sent to a receiver's headset.

In the voice communication method provided in this embodiment of the present invention, for the receiver, the demodulated voice information is separated from the received modulated mixed signal, the demodulated voice information is then converted into the voice signal, and the voice signal is sent to the receiver's headset. Compared with the prior art, in the embodiments of the present invention, headsets serve as communication equipment, so that operation complexity is decreased and possibility of accidents during operation of a worker is reduced. The headsets at low prices are used as the communication equipment, so that the communication cost and the maintenance cost are decreased. With the headset as the communication equipment, a connection situation between two microwave communication devices is able to be detected, so that maintainability of the IDU and ODU is increased.

### Third Embodiment

In this embodiment, a sender's microwave communication device first mixes voice information and management information to obtain mixed information, modulates the mixed information to obtain a modulated mixed signal, and sends the modulated mixed signal to a receiver's microwave communication device. The receiver's microwave communication device first demodulates the modulated mixed signal to obtain a demodulated mixed signal, and separates demodulated voice information from the demodulated mixed signal.

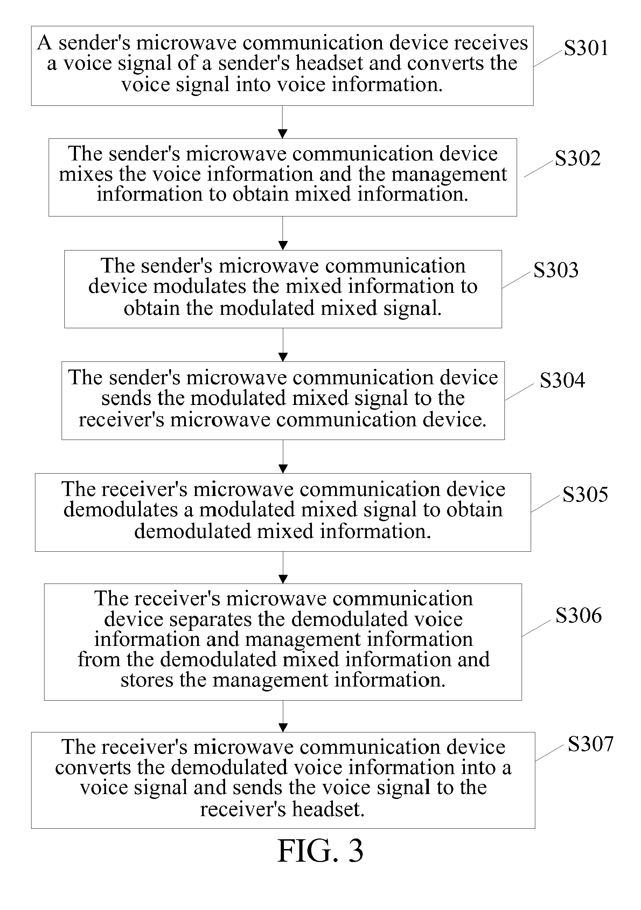

As shown in FIG. 3, the voice communication method includes the following steps.

In step S301, the sender's microwave communication device receives a voice signal of a sender's headset, converts the voice signal into voice information. The sender's microwave communication device is disposed with an interface. The sender's headset is connected to the sender's microwave communication device through the interface. The interface is a standard headset socket or a USB interface.

In step S302, the sender's microwave communication device mixes the voice information and the management information to obtain mixed information.

The management information is information related to management performed by an IDU on an ODU, such as setting and querying.

In step S303, the sender's microwave communication device modulates the mixed information to obtain the modulated mixed signal. In this embodiment, a modulation and demodulation chip is used to modulate the mixed information.

In step S304, the sender's microwave communication device sends the modulated mixed signal to the receiver's microwave communication device. The sender's microwave communication device is connected to the receiver's microwave communication device through an intermediate frequency cable.

In step S305, the receiver's microwave communication device demodulates the modulated signal to obtain demodulated mixed information. In this embodiment, a modulation and demodulation chip is used to demodulate the modulated signal.

In step S306, the receiver's microwave communication device separates the demodulated voice information and management information from the demodulated mixed information, and stores the management information. The management information is information related to the management performed by the IDU on the ODU, such as setting and querying.

In step S307, the receiver's microwave communication device converts the demodulated voice information into a voice signal and sends the voice signal to the receiver's headset. The receiver's microwave communication device is disposed with an interface. The receiver's headset is connected to the receiver's microwave communication device through the interface. The interface is a standard headset socket or a USB interface.

### Fourth Embodiment

In this embodiment, a sender's microwave communication device first modulates voice information and management information respectively, mixes a modulated voice signal and a modulated management signal to obtain a modulated mixed signal, and sends the modulated mixed signal to a receiver's microwave communication device. The receiver's microwave communication device first separates a voice signal from the modulated mixed signal, and demodulates the voice signal to obtain demodulated voice information.

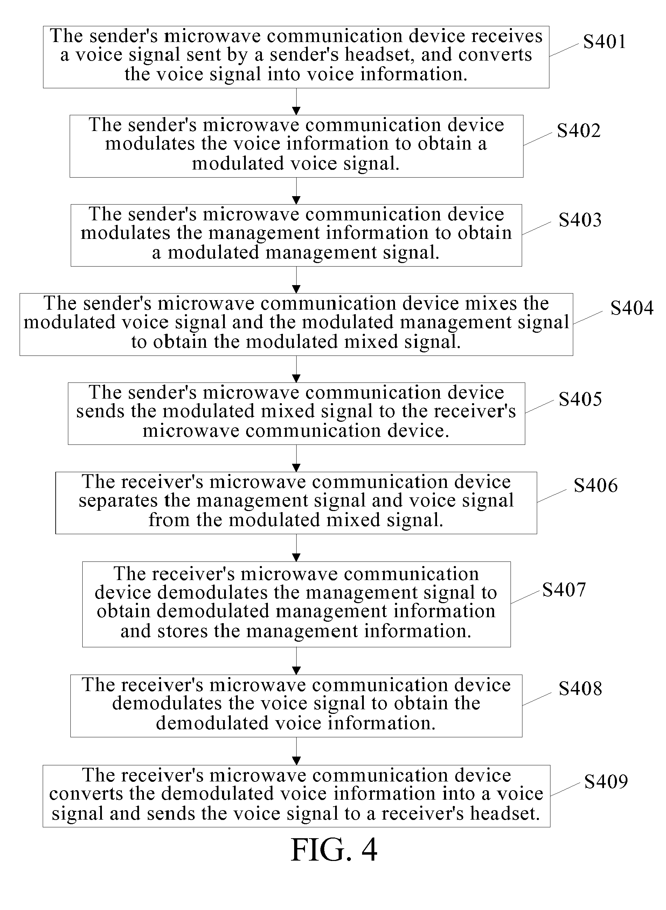

As shown in FIG. 4, the voice communication method includes the following steps.

In step S401, the sender's microwave communication device receives a voice signal sent by a sender's headset, converts the voice signal into voice information. The sender's microwave communication device is disposed with an interface. The sender's headset is connected to the sender's microwave communication device through the interface. The interface is a standard headset socket or a USB interface.

In step S402, the sender's microwave communication device modulates the voice information to obtain the modulated voice signal. In this embodiment, a modulation and demodulation chip is used to modulate the voice information.

In step S403, the sender's microwave communication device modulates the management information to obtain a modulated management signal. In this embodiment, a modulation and demodulation chip is used to modulate the management information.

The management information is information related to management performed by an IDU on an ODU, such as setting and querying.

Step S402 may be performed before S403, and may also be performed after S403; and step S402 and step S403 may also be performed at the same time.

In step S404, the sender's microwave communication device mixes the modulated voice signal and the modulated management signal to obtain a modulated mixed signal. In this embodiment, a combiner mixes the modulated voice signal and the modulated management signal.

In step S405, the sender's microwave communication device sends the modulated mixed signal to the receiver's microwave communication device. The sender's microwave communication device is connected to the receiver's microwave communication device through an intermediate frequency cable.

In step S406, the receiver's microwave communication device separates the management signal and the voice signal from the modulated mixed signal. In this embodiment, a combiner is used to separate the management signal and the voice signal from the modulated mixed signal.

In step S407, the receiver's microwave communication device demodulates the management signal to obtain demodulated management information and stores the management information. The management information is information related to the management of the IDU to the ODU, such as setting and querying. In this embodiment, a modulation and demodulation chip is used to demodulate the management signal.

In step S408, the receiver's microwave communication device demodulates the voice signal to obtain the demodulated voice information. In this embodiment, a modulation and demodulation chip is used to demodulate the voice signal.

Step S407 may be performed before S408, and may also be performed after S408; and step S407 and step S408 may also be performed at the same time.

In step S409, the receiver's microwave communication device converts the demodulated voice information into a voice signal and sends the voice signal to a receiver's headset. The receiver's microwave communication device is disposed with an interface. The receiver's headset is connected to the receiver's microwave communication device through the interface. The interface is a standard headset socket or a USB interface.

Therefore, through the voice communication method provided in this embodiment of the present invention, the safety during the work of a worker is able to be increased, the communication cost and the maintenance cost are able to be decreased, and the maintainability of the IDU and ODU is able to be increased.

In an embodiment of the present invention, a microwave communication device is provided, which is capable of increasing the safety during the work of a worker.

### Fifth Embodiment

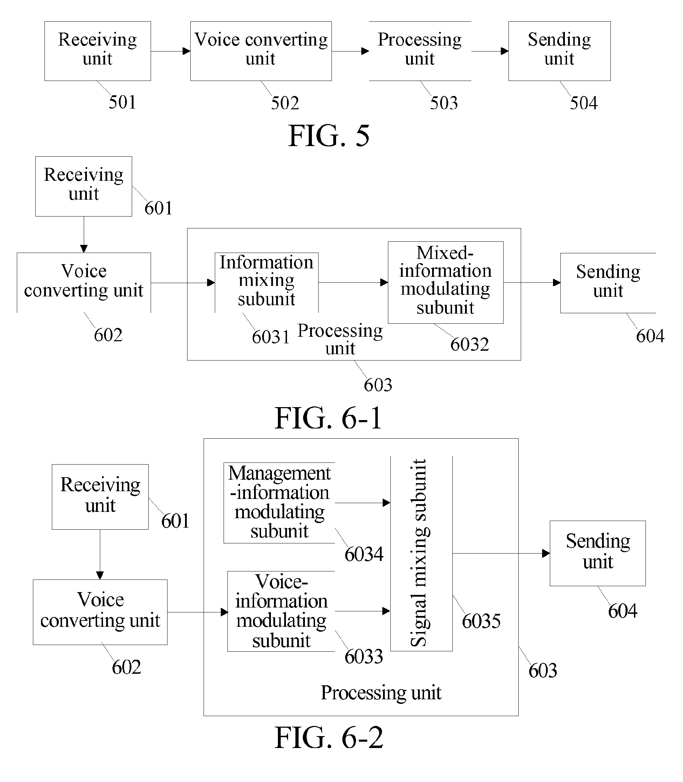

As shown in FIG. 5, the microwave communication device includes a receiving unit 501, a voice converting unit 502, a processing unit 503, and a sending unit 504.

The receiving unit 501 is adapted to receive a voice signal of a sender's headset.

The sender's headset is connected to the receiving unit 501 through an interface disposed on the microwave communication device. The interface is a standard headset socket or a USB interface.

The voice converting unit 502 is adapted to convert the voice signal into voice information.

The processing unit 503 is adapted to process the voice information and management information to generate a modulated mixed signal.

The sending unit 504 is adapted to send the modulated mixed signal to a receiver's microwave communication device.

The receiver's microwave communication device separates demodulated voice information from the modulated mixed signal, converts the demodulated voice information into a voice signal, and sends the voice signal to the receiver's headset.

With the microwave communication device provided in the embodiments of the present invention, the received voice signal of the sender's headset is converted into the voice information, the voice information and the management information are processed, and the generated modulated mixed signal after processing is sent to the receiver's microwave communication device. Compared with the prior art, in the embodiments of the present invention, the headsets serve as communication equipment, so that operation complexity is decreased and possibility of accidents during operation of a worker is reduced. The headsets at low prices are used as the communication equipment, so that the communication cost and the maintenance cost are decreased. With the headset as the communication equipment, a connection situation between two microwave communication devices is able to be detected, so that maintainability of the IDU and ODU is increased.

### Sixth Embodiment

As shown in FIGs. 6-1 and 6-2, a microwave communication device includes a receiving unit 601, a voice converting unit 602, a processing unit 603, and a sending unit 604.

The receiving unit 601 is adapted to receive a voice signal of a sender's headset.

The sender's headset is connected to the receiving unit 601 through an interface disposed on the microwave communication device. The interface is a standard headset socket or a USB interface.

The voice converting unit 602 is adapted to convert the voice signal into voice information.

The processing unit 603 is adapted to process the voice information and management information to generate a modulated mixed signal.

The sending unit 604 is adapted to send the modulated mixed signal to a receiver's microwave communication device.

The receiver's microwave communication device separates demodulated voice information from the modulated mixed signal, converts the demodulated voice information into a voice signal, and sends the voice signal to the receiver's headset.

As shown in FIG. 6-1, if the microwave communication device first mixes the voice information and the management information to obtain mixed information and modulates the mixed information to obtain the modulated mixed signal, the processing unit 603 includes an information mixing subunit 6031 and a mixed-information modulating subunit 6032.

The information mixing subunit 6031 is adapted to mix the voice information and the management information to obtain the mixed information.

The information mixing subunit 6031 stores the management information. The management information is information related to management performed by an IDU on an ODU, such as setting and querying.

The mixed-information modulating subunit 6032 is adapted to modulate the mixed information to obtain a modulated mixed signal. In this embodiment, the mixed-information modulating subunit 6032 is implemented as a modulation and demodulation chip.

As shown in FIG. 6-2, if the microwave communication device first modulates the voice information and management information and mixes the modulated voice signal and the modulated management signal to obtain the modulated mixed signal, the processing unit 603 includes a voice-information modulating subunit 6033, a management-information modulating subunit 6034, and a signal mixing subunit 6035.

The voice-information modulating subunit 6033 is adapted to modulate the voice information to obtain a modulated voice signal. In this embodiment, the voice-information modulating subunit 6033 is implemented as a modulation and demodulation chip.

The management-information modulating subunit 6034 is adapted to modulate the management information to obtain a modulated management signal. In this embodiment, the management-information modulating subunit 6034 is implemented as a modulation and demodulation chip.

The signal mixing subunit 6035 is adapted to mix the modulated voice signal and the modulated management signal to obtain the modulated mixed signal. In this embodiment, the signal mixing subunit 6035 is implemented as a combiner.

Therefore, through the microwave communication device provided in the embodiment of the present invention, the safety during the work of a worker is increased, the communication cost and the maintenance cost are decreased, and the maintainability of the IDU and ODU is increased.

In an embodiment of the present invention, a microwave communication device is provided, which is capable of increasing the safety during the work of a worker.

### Seventh Embodiment

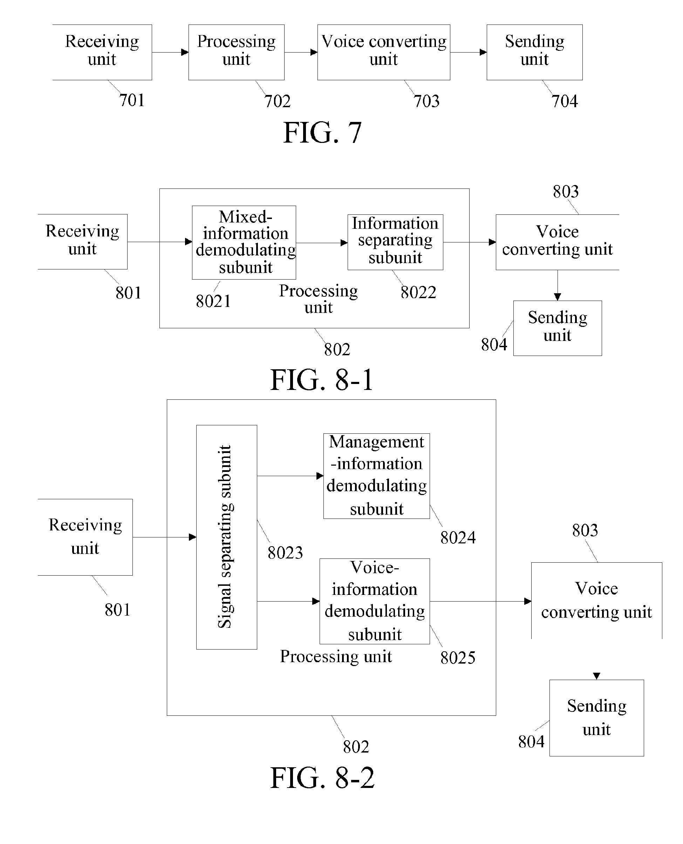

As shown in FIG. 7, the microwave communication device includes a receiving unit 701, a processing unit 702, a voice converting unit 703, and a sending unit 704.

The receiving unit 701 is adapted to receive a modulated mixed signal sent by a sender's microwave communication device.

A receiver's headset is connected to the receiving unit 701 through an interface disposed on the microwave communication device. The interface is a standard headset socket or a USB interface.

The processing unit 702 is adapted to process the modulated mixed signal to separate demodulated voice information.

The voice converting unit 703 is adapted to convert the demodulated voice information into a voice signal.

The sending unit 704 is adapted to send the voice signal to the receiver's headset.

In the microwave communication device provided in the embodiments of the present invention, the demodulated voice information is separated from the received modulated mixed signal. The demodulated voice information is converted into the voice signal, and the voice signal is sent to the receiver's headset. Compared with the prior art, in the embodiments of the present invention, the headsets serve as communication equipment, so that operation complexity is decreased and possibility of accidents during operation of a worker is reduced. The headsets at low prices are used as the communication equipment, so that the communication cost and the maintenance cost are decreased. With the headset as the communication equipment, a connection situation between two microwave communication devices is able to be detected, so that maintainability of the IDU and ODU is increased.

### Eighth Embodiment

As shown in FIGs. 8-1 and 8-2, the microwave communication device includes a receiving unit 801, a processing unit 802, a voice converting unit 803, and a sending unit 804.

The receiving unit 801 is adapted to receive a modulated mixed signal sent by a sender's microwave communication device.

A receiver's headset is connected to the receiving unit 801 through an interface disposed on the receiver's microwave communication device. The interface is a standard headset socket or a USB interface.

The processing unit 802 is adapted to process the modulated mixed signal to separate demodulated voice information.

The voice converting unit 803 is adapted to convert the demodulated voice information into a voice signal.

The sending unit 804 is adapted to send the voice signal to the receiver's headset.

As shown in FIG. 8-1, after the receiving unit 801 receives the modulated mixed signal sent by the sender's microwave communication device, if the microwave communication device first demodulates the modulated mixed signal to obtain a demodulated mixed signal and then separates the demodulated voice information from the demodulated mixed signal, the processing unit 802 includes a mixed-information demodulating subunit 8021 and an information separating subunit 8022.

The mixed-information demodulating subunit 8021 is adapted to demodulate the modulated mixed signal to obtain demodulated mixed information. In this embodiment, the mixed-information demodulating subunit 8021 is implemented as a modulation and demodulation chip.

The information separating subunit 8022 is adapted to separate the demodulated voice information and management information from the demodulated mixed information.

Here, the information separating subunit 8022 is able to separate the voice information and the management information from the mixed information and store the management information. The management information is information related to management performed by an IDU on an ODU, such as setting and querying.

As shown in FIG. 8-2, after the receiving unit 801 receives the modulated mixed signal sent by the sender's microwave communication device, if the microwave communication device first separates the voice signal from the modulated mixed signal and then demodulates the voice signal to obtain demodulated voice information, the processing unit 802 includes a signal separating subunit 8023, a management-information demodulating subunit 8024, and a voice-information demodulating subunit 8025.

The signal separating subunit 8023 is adapted to separate the management signal and voice signal from the modulated mixed signal. In this embodiment, the signal separating subunit 8023 is implemented as a combiner.

The management-information demodulating subunit 8024 is adapted to demodulate the management signal to obtain the demodulated management information and store the management information. The management information is information related to management performed by an IDU on an ODU, such as setting and querying. In this embodiment, the management-information demodulating subunit 8024 is implemented as a modulation and demodulation chip.

The voice-information demodulating subunit 8025 is adapted to demodulate the voice signal to obtain the demodulated voice information. In this embodiment, the voice-information demodulating subunit 8025 is implemented as a modulation and demodulation chip.

Therefore, through the microwave communication device provided in the embodiment of the present invention, the safety during the work of a worker is increased, the communication cost and the maintenance cost are decreased, and the maintainability that the IDU manages the ODU is increased.

In an embodiment of the present invention, a voice communication system is provided, which is capable of increasing the safety during the work of a worker.

### Ninth Embodiment

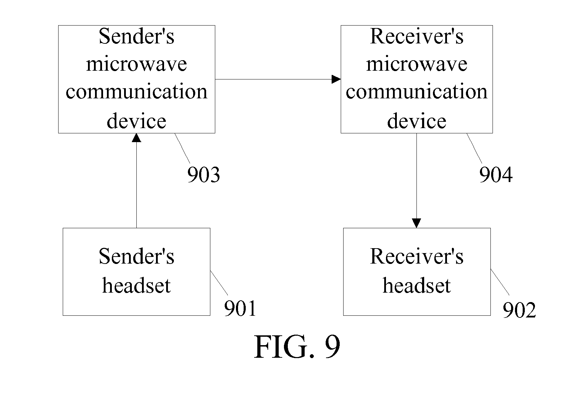

As shown in FIG. 9, the voice communication system includes a sender's headset 901 and a receiver's headset 902. The sender's headset 901 is connected to a sender's microwave communication device 903, the receiver's headset 902 is connected to a receiver's microwave communication device 904, and the sender's microwave communication device 903 is connected to the receiver's microwave communication device 904.

The sender's microwave communication device 903 is adapted to receive a voice signal of the sender's headset 901, convert the voice signal into voice information, process the voice information and management information to generate a modulated mixed signal, and send the modulated mixed signal to the receiver's microwave communication device 904.

The receiver's microwave communication device 904 is adapted to receive the modulated mixed signal sent by the sender's microwave communication device 903, process the modulated mixed signal to separate the demodulated voice information, and convert the demodulated voice information into a voice signal and send the voice signal to the receiver's headset 902.

The sender's microwave communication device 903 is connected to the receiver's microwave communication device 904 through an intermediate frequency cable. The sender's microwave communication device 903 and the receiver's microwave communication device 904 are both disposed with an interface. The sender's headset 901 is connected to the sender's microwave communication device 903 through the interface. The receiver's headset 902 is connected to the receiver's microwave communication device 904 through the interface. The interface is a standard headset socket or a USB interface.

In the voice communication system provided in this embodiment of the present invention, the sender's microwave communication device converts the received voice signal of the sender's headset into voice information, processes the voice information and management information, and sends the generated modulated mixed signal after processing to the receiver's microwave communication device. The receiver's microwave communication device separates demodulated voice information from the received modulated mixed signal, converts the demodulated voice information into the voice signal, and sends the voice signal to the receiver's headset. Compared with the prior art, in the embodiments of the present invention, the headsets serve as communication equipment, so that operation complexity is decreased and possibility of accidents during operation of a worker is reduced. The headsets at low prices are used as the communication equipment, so that the communication cost and the maintenance cost are decreased. With the headset as the communication equipment, a connection situation between two microwave communication devices is able to be detected, so that the maintainability of the IDU and ODU is increased.

As contents such as information interactions and performing processes among all units in the device and system are based on the same conception as the method in the embodiments of the present invention, the specific contents thereof may be obtained with reference to the illustration of the method in the embodiments of the present invention, and are not repeated here.

The present invention is applicable to voice communication between a worker in an equipment room and a worker on a tower during microwave deployment and maintenance. However, the present invention is not limited thereto.

Persons of ordinary skill in the art should understand that all or a part of the processes of the method according to the embodiments may be implemented by a computer program instructing relevant hardware. The program may be stored in a computer readable storage medium. When the program is run, the processes of the method according to the embodiments are performed. The storage medium may be a magnetic disk, an optical disk, a read-only memory (ROM) or a random access memory (RAM).

The foregoing contents are only specific implementation of the embodiments of the present invention. However, the scope of the embodiments of the present invention is not limited thereto. Various variations and replacements made by any persons skilled in the art without departing from scope of the present invention should fall within the protection scope of the present invention as defined by the appended claims.

## Claims

1. A voice communication method, applicable in a microwave communication device, comprising:
receiving a voice signal of a sender's headset;
converting the voice signal into voice information;
processing the voice information and management information to generate a modulated mixed signal; and
sending the modulated mixed signal to a receiver's microwave communication device.

2. The voice communication method according to claim 1, wherein the processing the voice information and the management information to generate the modulated mixed signal comprises:
mixing the voice information and the management information to obtain mixed information; and
modulating the mixed information to obtain the modulated mixed signal.

3. The voice communication method according to claim 1, wherein the processing the voice information and the management information to generate the modulated mixed signal comprises:
modulating the voice information to obtain a modulated voice signal;
modulating the management information to obtain a modulated management signal; and
mixing the modulated voice signal and the modulated management signal to obtain the modulated mixed signal.

4. A voice communication method, applicable in a microwave communication device, comprising:
receiving a modulated mixed signal sent by a sender's microwave communication device;
processing the modulated mixed signal to separate demodulated voice information;
converting the demodulated voice information into a voice signal; and
sending the voice signal to a receiver's headset.

5. The voice communication method according to claim 4, wherein the processing the modulated mixed signal to separate the demodulated voice information comprises:
demodulating the modulated mixed signal to obtain demodulated mixed information; and
separating the demodulated voice information and demodulated management information from the demodulated mixed information.

6. The voice communication method according to claim 4, wherein the processing the modulated mixed signal to separate the demodulated voice information comprises:
separating a management signal and a voice signal from the modulated mixed signal;
demodulating the management signal to obtain demodulated management information; and
demodulating the voice signal to obtain the demodulated voice information.

7. A microwave communication device, comprising:
a receiving unit, adapted to receive a voice signal of a sender's headset;
a voice converting unit, adapted to convert the voice signal into voice information;
a processing unit, adapted to process the voice information and management information to generate a modulated mixed signal; and
a sending unit, adapted to send the modulated mixed signal to a receiver's microwave communication device.

8. The microwave communication device according to claim 7, wherein the processing unit comprises:
a information mixing subunit, adapted to mix the voice information and the management information to obtain mixed information; and
a mixed-information modulating subunit, adapted to modulate the mixed information to obtain the modulated mixed signal.

9. The microwave communication device according to claim 7, wherein the processing unit comprises:
a voice-information modulating subunit, adapted to modulate the voice information to obtain a modulated voice signal;
a management-information modulating subunit, adapted to modulate the management information to obtain a modulated management signal; and
a signal mixing subunit, adapted to mix the modulated voice signal and the modulated management signal to obtain the modulated mixed signal.

10. A microwave communication device, comprising:
a receiving unit, adapted to receive a modulated mixed signal sent by a sender's microwave communication device;
a processing unit, adapted to process the modulated mixed signal to separate demodulated voice information;
a voice converting unit, adapted to convert the voice information into a voice signal; and
a sending unit, adapted to send the voice signal to a receiver's headset.

11. The microwave communication device according to claim 10, wherein the processing unit comprises:
a mixed-information demodulating subunit, adapted to demodulate the modulated mixed signal to obtain demodulated mixed information; and
a information separating subunit, adapted to separate the demodulated voice information and demodulated management information from the demodulated mixed information.

12. The microwave communication device according to claim 10, wherein the processing unit comprises:
a signal separating subunit, adapted to separate a management signal and a voice signal from the modulated mixed signal;
a management-information demodulating subunit, adapted to demodulate the management signal to obtain the demodulated management information; and
a voice-information demodulating subunit, adapted to demodulate the voice signal to obtain the demodulated voice information.

13. A voice communication system, comprising a sender's headset, a receiver's headset, a sender's microwave communication device connected to the sender's headset, and a receiver's microwave communication device connected to the receiver's headset, wherein the sender's microwave communication device is connected to the receiver's microwave communication device,
the sender's microwave communication device is adapted to receive a voice signal of the sender's headset, convert the voice signal into voice information, process the voice information and management information to generate a modulated mixed signal, and send the modulated mixed signal to the receiver's microwave communication device, and
the receiver's microwave communication device is adapted to receive the modulated mixed signal sent by the sender's microwave communication device, process the modulated mixed signal to separate demodulated voice information, convert the demodulated voice information into the voice signal, and send the voice signal to the receiver's headset.

## Amended claims

### Amended claims in accordance with Rule 137(2) EPC.

**1.** A voice communication method, applicable in a microwave communication device, **characterized by** comprising:
receiving (S101) a voice signal of a sender's headset;
converting (S102) the voice signal into voice information;
processing (S103) the voice information and management information to generate a modulated mixed signal; and
sending (S104) the modulated mixed signal to a receiver's microwave communication device;
wherein the management information is information related to management performed by an indoor unit, IDU, on an outdoor unit, ODU.

**2.** The voice communication method according to claim 1, wherein the processing the voice information and the management information to generate the modulated mixed signal comprises:
mixing the voice information and the management information to obtain mixed information; and
modulating the mixed information to obtain the modulated mixed signal.

**3.** The voice communication method according to claim 1, wherein the processing the voice information and the management information to generate the modulated mixed signal comprises:
modulating the voice information to obtain a modulated voice signal;
modulating the management information to obtain a modulated management signal; and
mixing the modulated voice signal and the modulated management signal to obtain the modulated mixed signal.

**4.** A voice communication method, applicable in a microwave communication device, **characterized by** comprising:
receiving (S201) a modulated mixed signal sent by a sender's microwave communication device;
processing (S202) the modulated mixed signal to separate demodulated voice information;
converting (S203) the demodulated voice information into a voice signal; and
sending (S204) the voice signal to a receiver's headset;
wherein the management information is information related to management performed by an indoor unit, IDU, on an outdoor unit, ODU.

**5.** The voice communication method according to claim 4, wherein the processing the modulated mixed signal to separate the demodulated voice information comprises:
demodulating the modulated mixed signal to obtain demodulated mixed information;
and
separating the demodulated voice information and demodulated management information from the demodulated mixed information.

**6.** The voice communication method according to claim 4, wherein the processing the modulated mixed signal to separate the demodulated voice information comprises:
separating a management signal and a voice signal from the modulated mixed signal;
demodulating the management signal to obtain demodulated management information; and
demodulating the voice signal to obtain the demodulated voice information.

**7.** A microwave communication device, **characterized by** comprising:
a receiving unit (501), adapted to receive a voice signal of a sender's headset;
a voice converting unit (502), adapted to convert the voice signal into voice information;
a processing unit (503), adapted to process the voice information and management information to generate a modulated mixed signal; and
a sending unit (504), adapted to send the modulated mixed signal to a receiver's microwave communication device;
wherein the management information is information related to management performed by an indoor unit, IDU, on an outdoor unit, ODU.

**8.** The microwave communication device according to claim 7, wherein the processing unit comprises:
a information mixing subunit, adapted to mix the voice information and the management information to obtain mixed information; and
a mixed-information modulating subunit, adapted to modulate the mixed information to obtain the modulated mixed signal.

**9.** The microwave communication device according to claim 7, wherein the processing unit comprises:
a voice-information modulating subunit, adapted to modulate the voice information to obtain a modulated voice signal;
a management-information modulating subunit, adapted to modulate the management information to obtain a modulated management signal; and
a signal mixing subunit, adapted to mix the modulated voice signal and the modulated management signal to obtain the modulated mixed signal.

**10.** A microwave communication device, **characterized by** comprising:
a receiving unit (701), adapted to receive a modulated mixed signal sent by a sender's microwave communication device;
a processing unit (702), adapted to process the modulated mixed signal to separate demodulated voice information;
a voice converting unit (703), adapted to convert the voice information into a voice signal; and
a sending unit (704), adapted to send the voice signal to a receiver's headset;
wherein the management information is information related to management performed by an indoor unit, IDU, on an outdoor unit, ODU.

**11.** The microwave communication device according to claim 10, wherein the processing unit comprises:
a mixed-information demodulating subunit, adapted to demodulate the modulated mixed signal to obtain demodulated mixed information; and
a information separating subunit, adapted to separate the demodulated voice information and demodulated management information from the demodulated mixed information.

**12.** The microwave communication device according to claim 10, wherein the processing unit comprises:
a signal separating subunit, adapted to separate a management signal and a voice signal from the modulated mixed signal;
a management-information demodulating subunit, adapted to demodulate the management signal to obtain the demodulated management information; and
a voice-information demodulating subunit, adapted to demodulate the voice signal to obtain the demodulated voice information.

**13.** A voice communication system, **characterized by** comprising a sender's headset (901), a receiver's headset (902), a sender's microwave communication device connected to the sender's headset (903), and a receiver's microwave communication device connected to the receiver's headset (904), wherein the sender's microwave communication device is connected to the receiver's microwave communication device,
the sender's microwave communication device is adapted to receive a voice signal of the sender's headset, convert the voice signal into voice information, process the voice information and management information to generate a modulated mixed signal, and send the modulated mixed signal to the receiver's microwave communication device, and
the receiver's microwave communication device is adapted to receive the modulated mixed signal sent by the sender's microwave communication device, process the modulated mixed signal to separate demodulated voice information, convert the demodulated voice information into the voice signal, and send the voice signal to the receiver's headset;
wherein the management information is information related to management performed by an indoor unit, IDU, on an outdoor unit, ODU.
